# EUROPEAN PATENT SPECIFICATION

(11) **EP 3 518 722 B1**
(45) Date of publication and mention of the grant of the patent: **29.04.2020**
(21) Application number: 17849855.6
(22) Date of filing: 03.08.2017
(51) Int. Cl.: A47L 15/48

(54) **DISHWASHER WITH HEAT PUMP**
GESCHIRRSPÜLER MIT WÄRMEPUMPE
LAVE-VAISSELLE ÉQUIPÉ D'UNE POMPE À CHALEUR

(30) Priority: 29.09.2016 TR 201613654
(43) Date of publication of application: 07.08.2019
(73) Proprietor: Arçelik Anonim Sirketi, 34445 Istanbul (TR)
(72) Inventor: SAKALLI, Özgün, 34950 Tuzla/Istanbul (TR); AYDIN-TUG, Çetin, 34950 Tuzla/Istanbul (TR); KUYUMCUOGLU, Aleks, 34950 Tuzla/Istanbul (TR); DÖKMECI, Saadettin, 34950 Tuzla/Istanbul (TR); POYRAZ, Onur, 34950 Tuzla/Istanbul (TR)
(86) International application number: PCT/TR2017/050366
(87) International publication number: WO 2018/063133

(56) References cited:
- EP-A1- 2 628 838
- DE-A1-102012 105 670
- JP-A- 2007 125 198

## Description

The present invention relates to a dishwasher of the type with heat pump.

The heat pump system provided in dishwashers with heat pump, consists of a compressor enabling circulation of a refrigerant by pressurizing it, flow tubes in which the refrigerant circulates, a condenser, an evaporator, and an expansion member. Similar to the conventional dishwashers, the washing programs in dishwashers with heat pump are also composed of the main washing, cold rinsing, warm rinsing and the drying steps. In conventional dishwashers, water heating process in such steps is provided by a heater, in dishwashers with heat pump, this is provided by the condenser which is the "warm" component of the heat pump system. In systems with heat pump, noise levels during heating of water are higher as a compressor is provided in addition to the conventional system. Further, the electronic card controlling the heat pump system or all of the electrical components extremely heat up, causing malfunctions.

Patent application no. DE102012105670 (A1) discloses a household appliance using a heat pump system for drying. Patent application JP2007125198A discloses a dishwasher comprising a heat pump, wherein a condenser is located above an evaporator. The aim of the present invention is to realize a dishwasher of the type with heat pump, which is enabled to operate noiselessly, and whose electronic card is prevented from heating up extremely.

The dishwasher realized to achieve the aim of the present invention has a heat pump system consisting of a compressor performing the refrigerant cycle, a condenser, an evaporator, refrigerant flow tubes, and an expansion member, the condenser acts as a heater, and the washing water is heated by the condenser placed in a chamber. The condenser and the chamber accommodating the condenser are fixed on a condenser bearing plate. The evaporator is provided in an evaporator cabinet, on the lower portion of the dishwasher body, also called the chassis.

In the dishwasher of the invention, feet of elastic structure are used between the condenser bearing plate and the evaporator cabinet, enabling placement of the bearing plate by resting it on the evaporator cabinet so as to leave space in between. The feet of elastic structure damp the vibrations forming on the condenser during operation of the compressor provided in the heat pump system, and prevent the vibrations from reaching the evaporator cabinet and therefore through the evaporator cabinet to the chassis, providing silent operation of the dishwasher.

In the dishwasher, the electronic card controlling the heat pump system or all of the electrical components is also prevented from malfunctioning by being cooled. In the embodiment of the invention, an electronic card housing is used, which is connected to said elastic feet and on which the electronic card is placed. The electronic card housing is placed by being suspended to the elastic feet in the space between the condenser bearing plate and the evaporator cabinet, enabling cooling of the electronic card through the air passed via the evaporator by the evaporator fan.

The dishwasher with heat pump realized to achieve the aim of the present invention is illustrated in the accompanying drawings, wherein:
Figure 1 is a schematic view of the dishwasher with heat pump.
Figure 2 is a schematic view of the feet of elastic structure provided between the condenser bearing plate and the evaporator cabinet, and the electronic card housing placed by being suspended to the feet.
Figure 3 is a schematic view of the structure guiding air on the electronic card, in an embodiment of the invention.
Figure 4 is a schematic view of the structure guiding air on the electronic card, in another embodiment of the invention.
Figure 5 is a perspective view of the electronic card housing.
Figure 6 is a detail view of the electronic card and the electronic card housing provided between the condenser bearing plate and the evaporator cabinet.

The elements in the figures are numbered individually and the correspondence of these numbers are given hereinafter.
1. Dishwasher
2. Body
3. Tub
4. Basket
5. Spray arm
6. Circulation pump
7. Valve
8. Heat pump system
9. Compressor
10. Chamber
11. Condenser
12. Evaporator
13. Evaporator fan
14. Expansion member
15. Condenser bearing plate
16. Evaporator cabinet
17. Electronic card
18. Foot
19. Knot
20. Groove
21. Electronic card housing
22. Lower air guide
23. Upper air guide
24. Front air guide
25. Air hole
26. Hanger
27. Insulation layer

The dishwasher (1) comprises a body (2), a tub (3) in which washing, rinsing and drying is performed, at least one basket (4) in which the items to be washed are placed, a circulation pump (6) enabling sending of the washing water on the items to be washed by means of at least one spray arm (5), a valve (7) of multi-port type directing the washing water to the spray arms (5), and a heat pump system (8) provided on the lower side of the tub (3), enabling heating of the washing water and used in drying process.

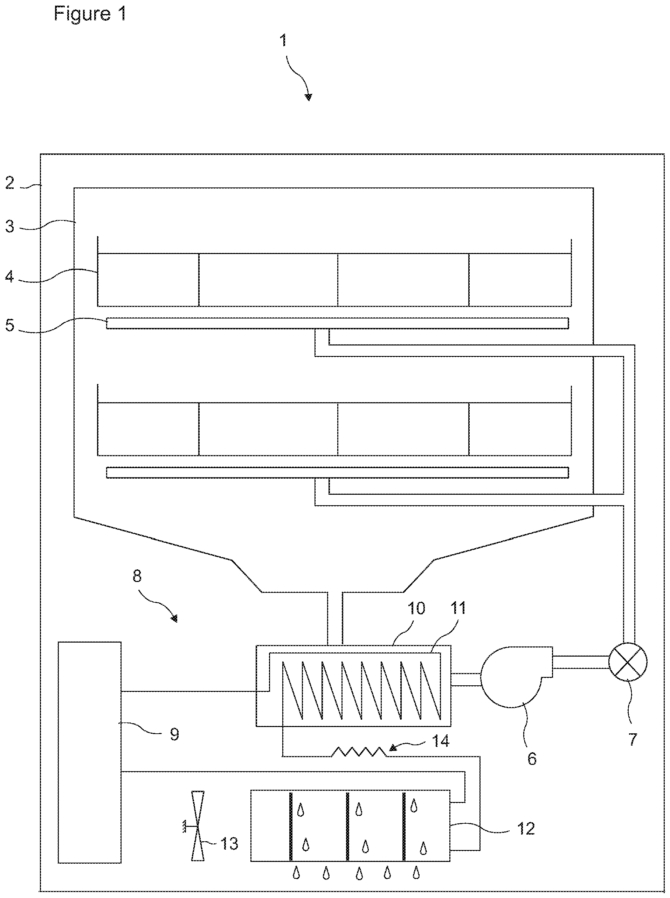

The heat pump system (8) comprises a compressor (9) performing the refrigerant cycle, a condenser (11) dissipating heat by condensing the refrigerant pressurized by the compressor (9), and used in heating the washing water by being placed in a chamber (10) in which the washing water is collected, an evaporator (12) drawing heat from the environment by evaporating the refrigerant and transferring said heat to the condenser (11), an evaporator fan (13) enabling conveyance of ambient air over the evaporator (12), and an expansion member (14) for example a capillary tube or an expansion valve enabling expansion of the refrigerant leaving the condenser (11) (figure 1).

The dishwasher (1) further comprises a condenser bearing plate (15) on whose upper surface the condenser (11) and the chamber (10) accommodating the condenser (11) are fixed, an evaporator cabinet (16) provided on the lower side of the body (2), in which the evaporator (12) is placed, and an electronic card (17) enabling controlling of the heat pump system (8) or of all electrical components of the dishwasher (1).

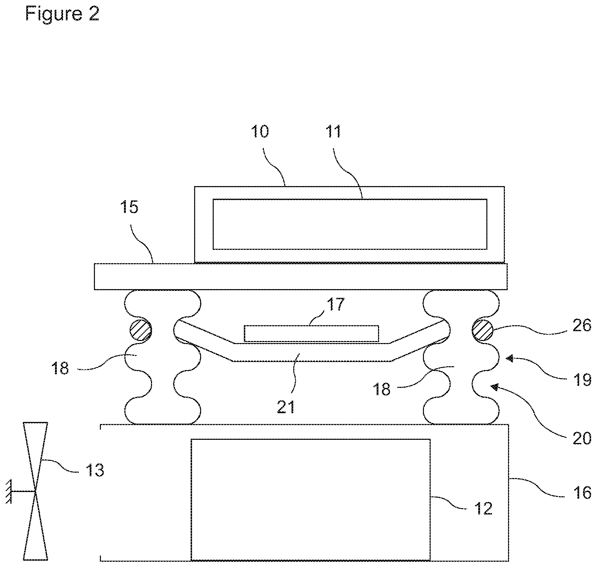

The dishwasher (1) of the invention comprises at least one foot (18) of elastic structure,
- provided between the condenser bearing plate (15) and the evaporator cabinet (16),
- enabling placement of the condenser bearing plate (15) by being rested on the evaporator cabinet (16) so as to leave space in between,
- preventing transmission of the vibrations generated on the condenser (11) by means of the refrigerant flow tubes, during operation of the compressor (9) provided in the heat pump system (8) to the evaporator cabinet (16) and therefore to the body (2) (Figure 2).

The condenser (11) and the evaporator (12) provided in the heat pump system (8) in the dishwasher (1), are placed on top of each other at the region on the lower side of the tub (3), so as to use the limited volume on the lower side of the tub (3) efficiently. The condenser (11) and the chamber (10) accommodating the condenser (10) are fixed on a condenser bearing plate (15). The evaporator (12) is placed inside an evaporator cabinet (16) forming an enclosed volume, the ambient air (partly the outer environment air, and partly the air inside the body (2)) guided by the evaporator fan (13) is directed to the outer environment by passing via the evaporator (12), and the heat drawn from outside is transmitted to the condenser (11). The condenser bearing plate (15) is placed on the evaporator cabinet (16) by means of the feet (18) so as to leave space in between. The vibrations generated on the condenser (11) by means of the refrigerant flow tubes during operation of the compressor (9), are damped by means of the feet (18) of elastic structure. The feet (18) prevent transmission of the vibrations generated on the condenser (11) to the evaporator cabinet (16) and therefore to the body (2) (to the lower portion of the body (2) also called the chassis, bearing the evaporator cabinet (16)), reducing the noise levels generated during operation of the heat pump system (8), and enabling the dishwasher (1) to operate noiselessly.

In an embodiment of the invention, the feet (18) of elastic structure have a plurality of knots (19) and at least one groove (20) arranged between the knots (19) (figure 2).

In an embodiment of the invention, the dishwasher (1) comprises an electronic card housing (21) connected to the feet (18), bearing the electronic card (17), and enabling positioning of the electronic card (17) so as to rest suspended in the space between the condenser bearing plate (15) and the evaporator cabinet (16). The electronic card housing (21) enables positioning of the electronic card (17) provided between the condenser (11) and the evaporator (12), to be positioned without contacting the condenser bearing plate (15) and the evaporator cabinet (16) (figure 2 to figure 6).

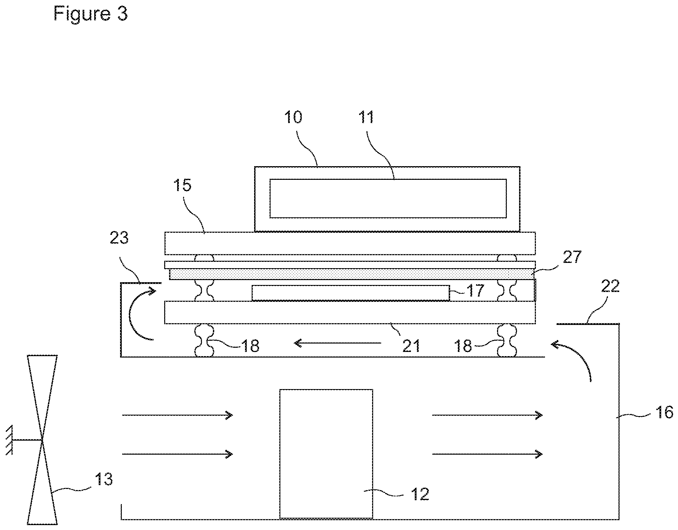

In an another embodiment of the invention, the dishwasher (1) comprises a lower air guide (22) extending from the evaporator cabinet (16) to the lower side of the electronic card housing (21), and an upper air guide (23) extending from the evaporator cabinet (16) to the upper side of the electronic card housing (21), enabling cooling of the electronic card (17) through air cooled by passing via the evaporator (12). The air cooled by passing via the evaporator (12) by the evaporator fan (13), enables effective cooling of the electronic card (17) by sweeping the lower side of the electronic card (17) by means of the lower air guide (22), and the upper side of the electronic card (17) by means of the upper air guide (22) (figure 3).

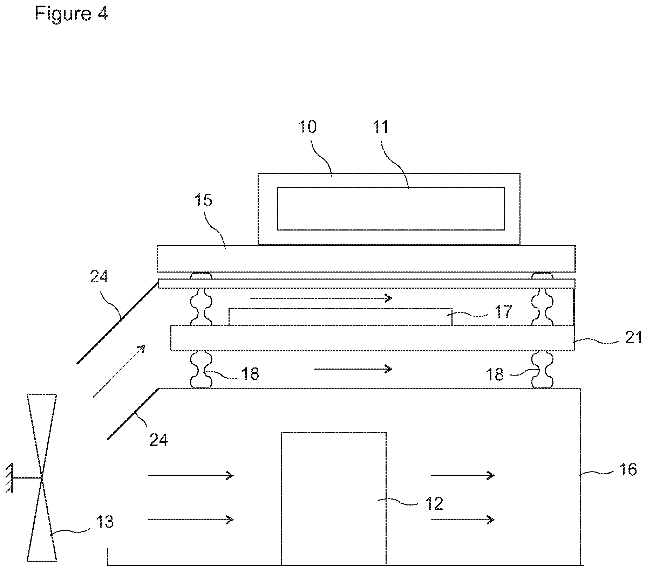

In an another embodiment of the invention, the dishwasher (1) comprises at least one front air guide (24) extending from the evaporator fan (13) to the electronic card housing (21), enabling cooling of the ambient air guided by the evaporator fan (13) to be cooled by passing it through the electronic card (17) (figure 4).

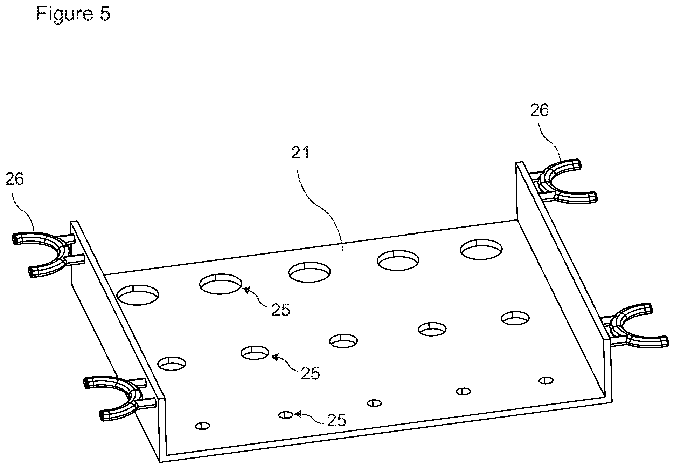

In another embodiment of the invention, the electronic card housing (21) comprises a plurality of air holes (25) arranged on the base bearing the electronic card (17), whose sequences and/or sizes vary in direction of the air flow so that the air flow rate affecting the electronic card (17) is maintained almost constant. In this embodiment, the air holes (25) have a circular shape, and are arranged so that they have larger diameters in direction of the air flow inversely proportional to the decrease of the dynamic pressure of the air sweeping the lower side of the electronic card housing (21), enabling the air to affect with equal flow rate on and thus homogeneous cooling of all regions of the lower surface of the electronic card (17) (figure 5).

In another embodiment of the invention, the electronic card housing (21) comprises at least one hanger (26) enabling its suspended positioning between the condenser bearing plate (15) and the evaporator cabinet (16), by being mounted on the feet (18). In this embodiment, the hangers (26) have a half-ring shape so as to partially surround the feet (18), and are mounted on the feet (18) by being engaged to the grooves (20) between the knots (19) (figure 2, figure 5).

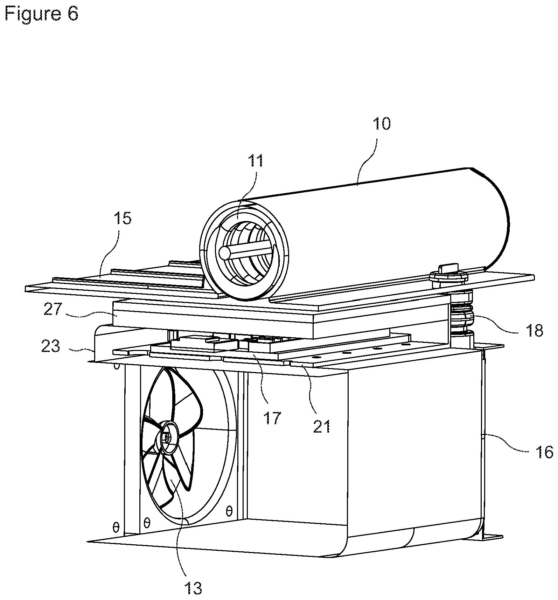

In another embodiment of the invention, the dishwasher (1) comprises an insulating layer (27) made of thermally insulating material, provided between the electronic card housing (21) and the condenser bearing plate (15), preventing the electronic card (17) from being affected from the high temperatures of the condenser (11) (figure 3, figure 6).

In the dishwasher (1) with heat pump, the feet (18) of elastic structure (18) prevent the vibrations generated on the condenser (11) during operation of the compressor (9) to the evaporator cabinet (16) and therefore to the body (2). The noise levels are reduced, enabling the dishwasher (1) to operate silently. The electronic card (17) controlling the heat pump system (8) or all the electrical components, is placed suspended to the space formed by means of the feet (18) between the condenser (11) and the evaporator (12). Also, the electronic card (17) is cooled with the air cooled by passing via the evaporator (12), preventing the electronic card (17) from being damaged and malfunctioning by heating up extremely.

## Claims

1. A dishwasher (1) **comprising** a heat pump system (8) having a compressor (9) performing the refrigerant cycle, a condenser (11) used in heating of the washing water by being placed in a chamber (10) in which washing water is collected, an evaporator (12) enabling drawing of heat from the environment, an evaporator fan (13) and an expansion member (14); a body (2), a condenser bearing plate (15) to the upper surface of which the condenser (11) and the chamber (10) accommodating the condenser (11) are fixed, an evaporator cabinet (16) located on the lower side of the body (2), in which the evaporator (12) is placed, and an electronic card (17) enabling controlling of the heat pump system (8) or of all electrical components of the dishwasher (1), **characterized by** at least one foot (18)
- provided between the condenser bearing plate (15) and the evaporator cabinet (16),
- enabling placement of the condenser bearing plate (15) by being rested on the evaporator cabinet (16) so as to leave space in between,
- having elastic structure preventing transmission of the vibrations generated on the condenser (11) to the evaporator cabinet (16).

2. A dishwasher (1) according to claim 1, **characterized by** the foot (18) having a plurality of knots (19) and at least one groove (20) arranged between the knots (19)

3. A dishwasher (1) according to claim 1 or 2, **characterized by** an electronic card housing (21) connected to the feet (18), bearing the electronic card (17), and enabling positioning of the electronic card (17) so as to rest suspended in the space between the condenser bearing plate (15) and the evaporator cabinet (16).

4. A dishwasher (1) according to claim 3, **characterized by** a lower air guide (22) extending from the evaporator cabinet (16) to the lower side of the electronic card housing (21), **and by** an upper air guide (23) extending from the evaporator cabinet (16) to the upper side of the electronic card housing (21), enabling cooling of the electronic card (17) with the air passed via the evaporator (12).

5. A dishwasher (1) according to claim 3, **characterized by** at least one front air guide (24) extending from the evaporator fan (13) to the electronic card housing (21), enabling the ambient air guided by the evaporator fan (13) to be cooled by passing it through the electronic card (17).

6. A dishwasher (1) according to claim 3, **characterized by** the electronic card housing (21) comprising a plurality of air holes (25) arranged on the base bearing the electronic card (17), whose sequences and/or sizes in direction of the air flow vary so that the air flow rate affecting the electronic card (17) could be maintained almost constant.

7. A dishwasher (1) according to claim 6, **characterized by** the electronic card housing (21) comprising air holes (25) of circular shape, arranged so that they have larger diameters in direction of the air flow, inversely proportional to the decrease of the dynamic pressure of air sweeping the lower side of the electronic card housing (21).

8. A dishwasher (1) according to claim 3, **characterized by** the electronic card housing (21) comprising at least one hanger (26) enabling its suspended positioning between the condenser bearing plate (15) and the evaporator cabinet (16), by being mounted on the feet (18).

9. A dishwasher (1) according to claim 8 **characterized by** the electronic card housing (21) comprising hangers (26) of half-ring shape, mounted to the feet (18) by being engaged to the grooves (20) between the knots (19).

10. A dishwasher (1) according to claim 3, **characterized by** an insulating layer (27) made of thermally insulating material, provided between the electronic card housing (21) and the condenser bearing plate (15).

## Patentansprüche

1. Eine Geschirrspülmaschine (1) **umfasst** ein Wärmepumpensystem (8) mit einem Kompressor (9), der den Kältemittelkreislauf durchführt, einen Kondensator (11), der zum Erhitzen des Spülwassers verwendet wird, indem er in eine Kammer (10) gegeben wird, in der das Spülwasser gesammelt wird, einen Verdampfer (12), der das Abziehen von Wärme aus der Umgebung ermöglicht, einen Verdampferlüfter (13) und ein Expansionselement (14), einen Körper (2), eine Kondensatorlagerplatte (15), an deren Oberseite der Kondensator (11) und dessen aufnehmende Kammer (10) befestigt sind, einen an der Unterseite des Körpers (2) befindlicher Verdampferschrank (16), worin sich der Verdampfer (12) befindet und eine elektronische Karte (17), die die Steuerung des Wärmepumpensystems (8) oder aller elektrischen Komponenten der Geschirrspülmaschine (1) ermöglicht; **gekennzeichnet wird er durch** mindestens einem Fuß (18)
- der zwischen der Kondensatorlagerplatte (15) und dem Verdampferschrank (16) vorgesehen ist,
- der es ermöglicht, dass die Kondensatorplatte (15) durch Auflegen auf den Verdampferschrank (16) ermöglicht wird, um dazwischen Platz zu lassen,
- der mit einer elastischen Struktur die Übertragung der am Kondensator (11) erzeugten Schwingungen auf den Verdampferschrank (16) verhindert.

2. Eine Geschirrspülmaschine (1), wie in Anspruch 1 aufgeführt, **ist dadurch gekennzeichnet, dass** der Fuß (18) mehrere Knoten (19) und mindestens eine zwischen den Knoten (19) angeordneten Nut (20) aufweist.

3. Eine Geschirrspülmaschine (1), wie in den Ansprüchen 1 oder 2 aufgeführt, **ist dadurch gekennzeichnet, dass** ein elektronischen Kartengehäuse (21) mit den Füssen (18) verbunden ist und die elektronische Karte (17) trägt sowie dessen Positionierung ermöglicht, so dass sie im Raum zwischen der Kondensatorlagerplatte (15) und dem Verdampferschrank (16) aufgehängt sind.

4. Eine Geschirrspülmaschine (1), wie in Anspruch 3 aufgeführt, **ist dadurch gekennzeichnet, dass** eine untere Luftführung (22) sich vom Verdampferschrank (16) zur Unterseite des elektronischen Kartengehäuses (21) erstreckt, sowie durch eine obere Luftführung (23), die sich vom Verdampferschrank (16) zur Oberseite des elektronischen Kartengehäuses (21) erstreckt, wodurch die elektronische Karte (17) gekühlt werden kann, während die Luft über den Verdampfer (12) geleitet wird.

5. Eine Geschirrspülmaschine (1), wie in Anspruch 3 aufgeführt, **ist dadurch gekennzeichnet, dass** mindestens eine vordere Luftführung (24) sich vom Verdampferlüfter (13) zum Gehäuse der elektronischen Karte (21) erstreckt, wodurch die vom Verdampferlüfter (13) geleitete Umgebungsluft gekühlt werden kann, indem sie durch die elektronische Karte (17) geleitet wird.

6. Eine Geschirrspülmaschine (1), wie in Anspruch 3 aufgeführt, **ist dadurch gekennzeichnet, dass** das elektronische Kartengehäuse (21) mehrere Luftlöcher (25) umfasst, die auf der Basis angeordnet sind, die die elektronische Karte (17) trägt, deren Sequenzen und / oder Größen in Richtung des Luftstroms variieren, so dass die die elektronische Karte (17) beeinflussende Luftströmungsrate fast gleichgehalten werden kann.

7. Eine Geschirrspülmaschine (1), wie in Anspruch 6 aufgeführt, **ist dadurch gekennzeichnet, dass** das elektronische Kartengehäuse (21) kreisförmige Luftlöcher (25) umfasst, die so angeordnet sind, dass sie in Richtung des Luftstroms größere Durchmesser haben und umgekehrt proportional zur Abnahme des dynamischen Luftdrucks, der die Unterseite des elektronischen Kartengehäuses (21) durchströmt.

8. Eine Geschirrspülmaschine (1), wie in Anspruch 3 aufgeführt, **ist dadurch gekennzeichnet, dass** das elektronische Kartengehäuse (21) mindestens einen Aufhänger (26) umfasst, der seine hängende Positionierung zwischen der Kondensatorlagerplatte (15) und dem Verdampferschrank (16) ermöglicht, indem es an den Füßen (18) montiert wird.

9. Eine Geschirrspülmaschine (1), wie in Anspruch 8 aufgeführt, **ist dadurch gekennzeichnet, dass** das elektronische Kartengehäuse (21) einen Aufhänger (26) mit Halbringform umfasst, die an den Füßen (18) angebracht sind, indem sie mit den Nuten (20) zwischen den Knoten (19) in Eingriff stehen.

10. Eine Geschirrspülmaschine (1), wie in Anspruch 3 aufgeführt, **ist dadurch gekennzeichnet, dass** eine Isolierschicht (27) aus wärmeisolierendem Material zwischen dem elektronischen Kartengehäuse (21) und der Kondensatorlagerplatte (15) vorgesehen ist.

## Revendications

1. Un lave-vaisselle (1) **comprenant** un système de pompe à chaleur (8) ayant un compresseur (9) effectuant le cycle de réfrigération, un condenseur (11) utilisé pour chauffer l'eau de lavage en étant placé dans une chambre (10) dans laquelle l'eau de lavage est collectée, un évaporateur (12) permettant d'extraire la chaleur de l'environnement, un ventilateur d'évaporateur (13) et un élément d'expansion (14) ; un corps (2), une plaque de support de condenseur (15) à la surface supérieure de laquelle sont fixés le condenseur (11) et la chambre (10) recevant le condenseur (11), une armoire d'évaporateur (16) située sur le côté inférieur du corps (2), dans laquelle est placé l'évaporateur (12), et une carte électronique (17) permettant de commander le système de pompe à chaleur (8) ou tous les composants électriques du lave-vaisselle (1), **est caractérisé en ce que** au moins un pied (18)
- est prévu entre la plaque de support du condenseur (15) et l'armoire de l'évaporateur (16),
- permettant de placer la plaque de support du condenseur (15) en la faisant reposer sur l'armoire de l'évaporateur (16) de manière à laisser un espace entre les deux,
- ayant une structure élastique empêchant la transmission des vibrations générées sur le condenseur (11) à l'armoire de l'évaporateur (16).

2. Un lave-vaisselle (1) selon la déclaration 1, **est caractérisé en ce que** le pied (18) a une pluralité de nœuds (19) et au moins une rainure (20) disposée entre les nœuds (19)

3. Un lave-vaisselle (1) selon la déclaration 1 ou 2, **est caractérisé en ce que** le boîtier de la carte électronique (21) est relié aux pieds (18), porte la carte électronique (17) et permet de positionner la carte électronique (17) de manière à ce qu'elle reste suspendue dans l'espace entre la plaque de support du condenseur (15) et l'armoire de l'évaporateur (16).

4. Un lave-vaisselle (1) selon la déclaration 3, **est caractérisé en ce que** le guide d'air inférieur (22) s'étend de l'armoire d'évaporation (16) au côté inférieur du boîtier de carte électronique (21), **et en ce que** le guide d'air supérieur (23) s'étend de l'armoire d'évaporation (16) au côté supérieur du boîtier de carte électronique (21), permettant le refroidissement de la carte électronique (17) avec l'air passé par l'évaporateur (12).

5. Un lave-vaisselle (1) selon la déclaration 3, **est caractérisé en ce que** au moins un guide d'air frontal (24) s'étend du ventilateur de l'évaporateur (13) au boîtier de la carte électronique (21), permettant de refroidir l'air ambiant guidé par le ventilateur de l'évaporateur (13) en le faisant passer à travers la carte électronique (17).

6. Un lave-vaisselle (1) selon la déclaration 3, **est caractérisé en ce que** le boîtier de la carte électronique (21) comprend une pluralité de trous d'air (25) disposés sur la base portant la carte électronique (17), dont les séquences et/ou les tailles dans la direction du flux d'air varient de sorte que le débit d'air affectant la carte électronique (17) puisse être maintenu presque constant.

7. Un lave-vaisselle (1) selon la déclaration 6, **est caractérisé en ce que** le boîtier de la carte électronique (21) comprend des trous d'air (25) de forme circulaire, disposés de manière à avoir des diamètres plus grands dans la direction du flux d'air, inversement proportionnels à la diminution de la pression dynamique de l'air balayant le côté inférieur du boîtier de la carte électronique (21).

8. Un lave-vaisselle (1) selon la déclaration 3, **est caractérisé en ce que** le boîtier de la carte électronique (21) comprend au moins un support (26) permettant son positionnement suspendu entre la plaque de support du condenseur (15) et l'armoire de l'évaporateur (16), en étant monté sur les pieds (18).

9. Un lave-vaisselle (1) selon la déclaration 8 **est caractérisé en ce que** le boîtier de la carte électronique (21) comprend des crochets (26) en forme de demi-anneau, montés sur les pieds (18) en étant engagés dans les rainures (20) entre les nœuds (19).

10. Un lave-vaisselle (1) selon la déclaration 3, **est caractérisé en ce que** une couche isolante (27) en matériau thermiquement isolant est prévue entre le boîtier de la carte électronique (21) et la plaque de support du condensateur (15).
